# EUROPÄISCHE PATENTSCHRIFT

(11) **EP 1 819 845 B1**
(45) Veröffentlichungstag und Bekanntmachung des Hinweises auf die Patenterteilung: **21.09.2011**
(21) Anmeldenummer: 05806632.5
(22) Anmeldetag: 25.10.2005
(51) Int. Cl.: C23G 1/00, F28G 9/00, G21F 9/00, C02F 5/08

(54) **REINIGUNGSVERFAHREN ZUR ENTFERNUNG VON MAGNETIT ENTHALTENDEN ABLAGERUNGEN AUS EINEM DRUCKBEHÄLTER EINES KRAFTWERKS**
CLEANING METHOD FOR REMOVING DEPOSITS CONTAINING MAGNETITE OUT OF A PRESSURE VESSEL OF A POWER PLANT
PROCEDE DE NETTOYAGE PERMETTANT D'ELIMINER LES DEPOTS CONTENANT DE LA MAGNETITE D'UNE CUVE SOUS PRESSION D'UNE CENTRALE ELECTRIQUE

(30) Priorität: 11.11.2004 DE 102004054471
(43) Veröffentlichungstag der Anmeldung: 22.08.2007
(73) Patentinhaber: Areva NP GmbH, 91052 Erlangen (DE)
(72) Erfinder: BITTER, Konrad, 91074 Herzogenaurach (DE); HLUCHY, Johann, 91336 Heroldsbach (DE)
(74) Vertreter: Mörtel & Höfner
(86) Internationale Anmeldenummer: PCT/EP2005/011409
(87) Internationale Veröffentlichungsnummer: WO 2006/053626

(56) Entgegenhaltungen:
- DD-A1- 135 406
- DE-A1- 4 114 951
- DE-A1- 4 117 625
- DE-A1- 4 131 766
- DE-A1- 19 857 342
- US-A- 3 072 502
- US-A- 3 297 580
- US-A- 3 627 687
- US-A- 4 310 435
- US-A- 4 789 406
- US-A- 5 037 483
- US-A- 5 575 863
- US-A1- 2005 126 587
- YU.V. POLENOV, E.V.EGOROVA, V.A. PUSHKINA: "Mechanism of decomposition of sodium hydroxymethanesulfinate in aqueous solutions" RUSSIAN JOURNAL OF GENERAL CHEMISTRY, Bd. 71, Nr. 5, 2001, Seiten 722-725, 2001
- S.V. MAKAROV, C. MUNDOMA, S.A. SVAROSKY, .X. SHI, P.M. GANNETT, R.H. SIMOSY I: "reactive oxygen species in the aerobic decomposition of sodium hydroxymethanesulfinate" ARCHIVES OF BIOCHEMISTRY AND BIOPHYSICS, Bd. 367, Nr. 2, 15. Juni 1999 (1999-06-15), - 15. Juni 1999 (1999-06-15) Seiten 289-296,

## Beschreibung

Die Erfindung betrifft ein Reinigungsverfahren zur Entfernung von Magnetit enthaltenden Ablagerungen aus einem Druckbehälter eines Kraftwerks. Ein solches Verfahren ist beispielsweise aus EP 273 182 A1 bekannt. Unter Druckbehältern sind beispielsweise Dampfkessel von konventionellen Kraftwerken oder die Sekundärseite bei Dampferzeugern in Kernkraftwerken zu verstehen. In aus stahl technischer Güte bestehenden Druckbehältern lagert sich Magnetit in Form einer festen Schicht auf der inneren behälteroberfläche, auf der Heizrohroberfläche, und hauptsächlich in Form von losen, sich am Boden der Behälter oder in strömungsberuhigten Bereichen festsetzenden Schlammansammlungen ab. Magnetit kann als eine Mischung aus Eisen-II- und Eisen-III-oxid angesehen werden. Zur Entfernung der Ablagerungen ist es bekannt, Komplexbildner wie EDTA bei erhöhten Reinigungstemperaturen einzusetzen. Um das Eisen-III in das leichter komplexierbare Eisen-II zu überführen, wird in der Regel Hydrazin als Reduktionsmittel eingesetzt. Die Handhabung von Hydrazin ist nun insofern problematisch, als dieser Stoff toxikologisch nicht unbedenklich ist. So wurde bei diesem Stoff z.B. eine krebserzeugende Wirkung nachgewiesen. Die Handhabung von Hydrazin erfordert somit einen hohen Aufwand für Maßnahmen, die ein Austreten von Hydrazin in die Umgebung verhindern. Die rechtlichen Belange eines "Hydrazinunfalles" mit Personenschäden im Hinblick auf Spätfolgen, die durch Kontamination und Inkorporation entstehen können, müssen vor jedem Einsatz geklärt werden.

Aus US-A-5,037,483 ist ein Reinigungsverfahren zur Entfernung von Eisenoxid enthaltenden Ablagerungen bekannt, das in zwei Stufen durchgeführt wird. In der ersten Stufe wird die zu reinigende Oberfläche eines Bauteils mit einer wässerigen Lösung behandelt, die zur Reduktion von Eisen-III-Ionen zu Eisen-II-Ionen Formaldehyd-sulfoxylat enthält. In der zweiten Stufe erfolgt eine Behandlung mit einer wässerigen Reinigungslösung, die einen mit Eisen-II-Ionen einen Komplex bildende Aminocarbonsäure enthält.

Davon ausgehend ist es die Aufgabe der Erfindung, ein Reinigungsverfahren der eingangs genannten Art vorzuschlagen, mit dem die geschilderten Nachteile umgangen werden können und mit dem in der ersten Stufe eine schnelle Schlammauflösung bei geringem Grundmetallangriff möglich ist.

Diese Aufgabe wird bei einem Reinigungsverfahren nach Anspruch 1 dadurch gelöst, dass in der ersten Stufe eine Reinigungslösung in den Druckbehälter eingebracht wird, die als Vorsubtanz Hexamethylentetramin und EDTA in einem Molverhältnis von 3,5 : 1 bis 2 : 1 enthält, wobei die Vorsubstanz bei den während der Reinigung vorherrschenden Bedingungen, etwa bei einer erhöhten Temperatur und/oder im leicht sauren pH-Bereich als Reduktionsmittel Formaldehyd freisetzt. Auf diese Weise bietet sich die Möglichkeit, eine Vorsubstanz zu verwenden, die toxikologisch unbedenklich oder zumindest weniger schädlich ist als Hydrazin, so dass bei der Anlieferung und bei der Einspeisung der Reinigungslösung in einen Druckbehälter die Gefahr einer gesundheitlichen Beeinträchtigung des Personals und einer Belastung der Umwelt verringert ist.

Das erfindungsgemäße Verfahren wird, wie das o.g. bekannte Verfahren auch, in zwei Stufen durchgeführt, wobei in einer ersten Stufe, nämlich einer Reduktionsstufe, eine Behandlung mit einer die Vorsubstanz enthaltenden ersten Reinigungslösung I und in einer sich daran anschließenden zweiten Stufe, einer Komplexierungsstufe, eine zweite Reinigungslösung II in den Druckbehälter eingespeist wird, welche einen mit zweiwertigen Eisen-Ionen eine lösliche Komplexverbindung bildenden Komplexbildner, nämlich EDTA, enthält. Der zweistufigen Verfahrensführung liegen folgende Überlegungen zugrunde: Die Reduktion des Magnetits nimmt wesentlich mehr Zeit in Anspruch als die Komplexierung von Eisen-II, was u.a. darauf zurück zu führen ist, dass mit ihr eine Zerstörung des Magnetitgitters einhergeht. Wenn während der Reduktionsphase größere Konzentrationen an Komplexbildnern vorhanden wären, könnten diese, insbesondere wenn in saurer Lösung gearbeitet wird, einen oxidativen Grundmetallangriff erheblich beschleunigen, in dem sie in die Lösung übertretendes Eisen-II durch Komplexbildung aus dem Redox-Gleichgewicht entfernen. Bei dem vorgeschlagenen Verfahren kann die das Reduktionsmittel enthaltende Lösung auf die Magnetitablagerungen, etwa bis zu deren vollständigen Reduktion, einwirken, ohne dass ein nennenswerter Grundmetallabtrag zu befürchten ist. Wenn anschließend an die Reduktionsstufe eine den Komplexbildner enthaltende Reinigungslösung II in den Druckbehälter eingespeist wird, ist ein Grundmetallangriff zum einen dadurch reduziert, dass dem Komplexbildner eine sehr große Menge an Eisen-II als Reaktionspartner zur Verfügung steht, so dass die Auflösung des Grundmetalls als Konkurrenzreaktion zurückgedrängt ist. Zum anderen läuft die Eisen-II-Komplexierung mit einer hohen Reaktionsgeschwindigkeit und dementsprechend in kurzer Zeit ab, so dass oxidativer Grundmetallangriff, der mit geringerer Reaktionsgeschwindigkeit abläuft, in nennenswertem Ausmaß gar nicht zum Tragen kommt.

Hexamethylentetramin setzt als Reduktionsmittel Formaldehyd frei. Dieser Stoff bzw. Aldehyde allgemein sind zur Reduktion von Magnetit geeignete Reduktionsmittel, die bei der Reduktion des Magnetits zu Karbonsäuren oxidiert werden. Diese können, wie weiter unten noch gezeigt wird, während der Reinigung aus dem Druckbehälter entfernt oder auf andere Weise unschädlich gemacht und damit ein korrosiver Angriff auf das Grundmetall verhindert werden.

Vorzugsweise wird die Reduktionsstufe in leicht saurer bis neutraler Lösung, insbesondere in einem pH-Bereich von 5 bis 7, bevorzugt von 5,0 bis 7,0 durchgeführt. Durch diese Maßnahme wird der Tatsache Rechnung getragen, dass die Gleichgewichtslinie nach Pourbaix für das Redox-System Fe₃O₄/Fe-II bei pH 6,8 (bei Raumtemperatur) verläuft. Die Einhaltung leicht saurer bis neutraler oder allenfalls leicht alkalischer Bedingungen, gewährleistet, dass die Reduktion des Magnetits mit ausreichender Reaktionsgeschwindigkeit voranschreitet. Bevorzugt ist weiterhin, dass der Reinigungslösung ein Komplexbildner in einer Menge zugesetzt wird, die maximal 10% der zum Komplexieren der durch die Reduktion entstandenen Menge an Eisen-II entspricht. Diese Maßnahme bewirkt ebenfalls eine Verschiebung des oben angegebenen Redox-Gleichgewichts auf die Eisen-II-Seite, in dem der Komplex die zweiwertigen Eisenionen bindet und aus dem Gleichgewicht entfernt. Auf diese Weise wird die Auflösung des Magnetitgitters begünstigt. Als Komplexbildner wird vorzugsweise EDTA verwendet. Hexamethylentetramin, das auch unter dem Namen Urotropin bekannt ist, ist in toxikologischer Hinsicht weit weniger bedenklich als Hydrazin, insbesondere bei Raumtemperatur, bei der die Reinigungslösung I in ein Kraftwerk angeliefert wird. Hexamethylentetramin setzt in saurer Umgebung und insbesondere bei erhöhten Reinigungstemperaturen Formaldehyd frei. Formaldehyd ist zwar kein toxikologisch unbedenklicher Stoff. Die Freisetzung erfolgt aber innerhalb des Druckkessels, also in einem geschlossenen System. Sehr gute Ergebnisse, insbesondere mit dem Substanzpaar Hexamethylentetramin / EDTA werden in einem Temperaturbereich von 90°C bis 200°C, vorzugsweise von 1.40°C bis 200°C erreicht. Tiefere Temperaturen etwa von 90 bis 120 °C sind zweckmäßig, wenn zum Schutz des Grundmetalls temperaturempfindliche Korrosionsinhibitoren wie z.B. 1-Octyn-3-ol eingesetzt werden. Wenn ein Molverhältnis von Hexamethylentetramin zu EDTA von 3,5 : 1 bis 2 : 1 eingehalten wird, wird eine schnelle Schlammauflösung erreicht und dabei der Grundmetallangriff auf ein nicht ins Gewicht fallendes Maß reduziert. Beste Ergebnisse werden erreicht, wenn die Reinigungslösung I 0,6 bis 0,7 mol/l Hexamethylentetramin und 0,17 bis 0,36 mol/l EDTA enthält. Auch im zweiten Schritt, nämlich der Komplexierungsstufe, wird EDTA als Komplexbildner verwendet. Daneben, dass EDTA ein sehr wirkungsvoller und in großen Mengen zu erschwinglichen Preisen erhältlicher Komplexbildner ist, ergibt sich der Vorteil, dass die Reduktionsstufe und die Komplexierungsstufe mit ein und demselben Komplexbildner durchgeführt werden, wodurch die Anzahl der insgesamt eingesetzten Chemikalien und damit wiederum die Gefahr von unerwünschten Wechselwirkungen zwischen den Chemikalien verringert ist.

Die Komplexierungsstufe wird in leicht saurer bis leicht alkalischer Lösung durchgeführt, da in diesem pH-Bereich eine besonders wirksame und damit schnelle Komplexierung erreicht wird. Bevorzugt wird in der Reaktionslösung ein pH-Bereich von 6 bis 10, insbesondere von 6,5 bis 9,3 eingehalten. Falls in der Reduktionsstufe nicht sämtlicher Magnetit reduziert wurde und dementsprechend bei Einspeisung der Reinigungslösung II in den Druckbehälter noch ein mehr oder weniger großer Rest an Magnetit vorhanden ist, wird die Magnetitauflösung bzw. die Zerstörung des Magnetitgitters durch EDTA beschleunigt. Ebenso beschleunigt wird zwar auch der Grundmetallangriff. Dieser hält sich aber zum einen dadurch in Grenzen, dass die Komplexierungsreaktion wesentlich schneller abläuft als Redox-Reaktionen im Phasengrenzgebiet Metall-Lösung. Zum anderem wird durch eine weitere Maßnahme verhindert, dass der pH-Wert zu allzu niedrigen, einen Grundmetallangriff beschleunigenden Werten absinkt. Die Maßnahme besteht darin, dass der Reinigungslösung II Triethylamin zugesetzt wird. Die Menge ist dabei so gewählt, dass ein leicht alkalischer pH-Bereich eingehalten wird. An das quasi als Puffersubstanz wirkende Triethylamin lagert sich die aus dem Formaldehyd bei der Reduktion von Eisen-III gebildete Ameisensäure an, wobei die gebildete Substanz flüchtig ist und bei den während der Komplexierungsstufe vorherrschenden Temperaturen abgedampft und somit aus der Lösung entfernt werden kann. In gleichem Maße reagiert Triethylamin mit CO₂ bzw. mit Kohlensäure. Diese entsteht, wenn Formaldehyd bis zur Vorstufe des Kohlendioxids oxidiert wird.

Durch den Zusatz des alkalisch reagierenden Triethylamin vermindert sich gleichzeitig die Menge an Alkalisierungsmitteln wie Ammoniak oder Morpholin, was insbesondere bei dem relativ teuren Morpholin von Vorteil ist. Vorzugsweise wird eine Reaktionslösung II eingesetzt, die bei der jeweiligen Reinigungstemperatur mit EDTA gesättigt ist und maximal 0,5 mol/l Triethylamin enthält.

### Ausführungsbeispiel:

Zur Durchführung des Verfahrens wird ein Teil des im Druckbehälter befindlichen Wassers abgelassen, so dass Platz für die einzuspeisende Reaktionslösung geschaffen wird. Das Kesselwasser wird dann auf die Reinigungstemperatur, beispielsweise auf 140°C gebracht, was beispielsweise durch Einleiten von Dampf erfolgen kann. Zur Einspeisung der Reaktionslösungen I und II kann es zweckmäßig sein, diese vor dem Einspeisen ebenfalls auf die Reinigungstemperatur zu bringen.

Die zur Durchführung des zweistufigen Reinigungsverfahrens verwendeten Reinigungslösungen I,II haben folgende Zusammensetzung:

| | Hexamethylentetramin | Diammonium-EDTA | Triethylamin | Bedarf zur Auflösung von 1000 kg Magnetit |
|---|---|---|---|---|
| **Reinigungslösung I** | 0,713 mol/l | 0,356 mol/l (= 104 g/l) | - | 1010 l |
| **Reinigungslösung II** | - | 1,369 mol/l (=400 g/l) | max. 0,469 mol/l (= 65 ml/l) | 9210 l |

Zur Auflösung von 1000 kg Magnetit in der Reduktionsstufe werden 1010 1 Reaktionslösung I, d.h. sind 0,713 kmol Hexamethylentetramin und 0,356 kmol EDTA, benötigt. Für die Komplexierungsstufe sind 9210 1 Reinigungslösung II erforderlich, die 1,369 kmol/l EDTA und max. 0,469 kmol/l Triethylamin enthalten. EDTA ist in Wasser nur in Form ihrer Salze löslich. Üblicherweise wird deshalb z.B. Diammonium-EDTA bzw. Triammonium-EDTA oder deren Mischung, oder Tri-Morpholin-EDTA verwendet. In der Reinigungslösung II kann durch den Triethylaminzusatz bis 33 % der Alkalisierungsmittel NH₃ bzw. Morpholin eingespart werden.

Die Zeitdauer für die Reduktionsstufe hängt in erster Linie von der umzusetzenden Magnetitmenge ab und beträgt etwa 15 Minuten bis einige Stunden. Um die Magnetitumsetzung zu beschleunigen wird von Zeit zu Zeit Dampf abgelassen. Aufgrund der Druckentlastung kommt es aufgrund einer intensiven Dampfblasenbildung zu starken Turbulenzen und zu einer Aufwirbelung des Schlamms. Die in einen Druckkessel eingespeiste Reinigungslösung I ist leicht sauer bis neutral (pH etwa 5 bis 7), was z.B. durch die sich wie eine Säure verhaltende teilweise mit Ammoniak oder Morpholin abgesättigte EDTA bewirkt wird. Die Vorsubstanz Hexamethylentetramin zerfällt bei der vorherrschenden Reinigungstemperatur von ca. 140 °C in Formaldehyd und Ammoniak (Reaktion 1). Formaldehyd reduziert das Eisen-III des Magnetits zu Eisen-II und wird selbst zu Ameisensäure oxidiert (Reaktion 2). Zumindest ein Teil der entstehenden Ameisensäure wird durch Ammoniak neutralisiert.

Nachdem ein erheblicher Teil, am besten die gesamte Magnetitmenge reduziert ist, was abhängig von der zu entfernenden Magnetitmenge und der Reinigungstemperatur von etwa 20 Minuten bis zu einigen Stunden dauern kann, wird die Reinigungslösung II, ggf. vorgewärmt, in den Druckbehälter eingespeist, ohne dass die darin befindliche Reinigungslösung I vorher abgelassen wird. Im Idealfall, also bei vollständig reduziertem Magnetit, wird in der Komplexierungsstufe lediglich das Eisen-II durch EDTA koordinativ gebunden und in Lösung gebracht. Die in der Reduktionsstufe oder durch Reduktion von Restmagnetit in der Komplexierungsstufe durch Oxidation von Formaldehyd gebildete Ameisensäure lagert sich an Triethylamin an, wobei eine flüchtige Verbindung entsteht, die bei den vorherrschenden Temperaturen in die Gasphase übergeht und durch Abdampfen aus dem Druckbehälter entfernt werden kann (Reaktion 3). Die Konzentration bzw. Menge an Triethylamin ist so ausgewählt, dass die Komplexierung im leicht alkalischen bis neutralen Bereich, also von etwa pH-Wert 8,5 bis 7 abläuft. Das aus Hexamethylentetramin freigesetzte Formaldehyd kann auch bis zum Kohlendioxid oxidiert werden (Reaktion 4). Dieses bzw. die daraus gebildete Kohlensäure wird ebenfalls an Triethylamin unter Bildung einer flüchtigen Verbindung angelagert.

Reaktion 1: C₆H₁₂N₄ + 6 H₂O → 4 NH₃ + 6 HCOH

Reaktion 2: Fe₃O₄ + HCOH → 3 FeO + HCOOH

Reaktion 3: (C₂H₅)₃N + HCOH → [(C₂H₅)₃NH]⁺HCOO⁻

Reaktion 4: 2 Fe₃O₄ + HCOH → 6 FeO + CO₂ + H₂O

## Patentansprüche

1. zweistufiges Reinigungsverfahren zur Entfernung von Magnetit enthaltenden Ablagerungen aus einem Druckbehälter eines Kraftwerks, bei dem die Ablagerungen mit einer ein Reduktionsmittel enthaltenden, auf eine erhöhte Reinigungstemperatur erwärmten wässerigen Reinigungslösung behandelt werden, um Eisen-III-Ionen zu Eisen-II-Ionen zu reduzieren, wobei eine Reinigungslösung in den Druckbehälter eingebracht wird, die eine Vorsubstanz enthält, welche unter den während der Reinigung vorliegenden Bedingungen das Reduktionsmittel freisetzt, **dadurch gekennzeichnet, dass** es in zwei Stufen durchgeführt wird, wobei in einer Reduktionsstufe eine Behandlung mit Hexamethylentetramin als Vorsubstanz und EDTA in einem Molverhältnis von 3, 5:1 bis 2:1 enthaltenden ersten Reinigungslösung I durchgeführt wird, und in einer sich daran anschließenden Komplexierungsstufe eine zweite Reinigungslösung II zudosiert wird, welche einen mit zweiwertigen Eisenionen eine lösliche Komplexverbindung bildenden Komplexbildner enthält.

2. Reinigungsverfahren nach Anspruch 1, **dadurch gekennzeichnet, dass** der Reinigungslösung II Triethylamin zugesetzt wird.

3. Reinigungsverfahren nach Anspruch 2, **dadurch gekennzeichnet, dass** die Reinigungslösung II mit EDTA gesättigt ist und maximal 0,5 mol/l Triethylamin enthält.

4. Reinigungsverfahren nach einem der vorhergehenden Ansprüche, **dadurch gekennzeichnet, dass** die Reduktionsstufe in leicht saurer bis leicht alkalischer Lösung durchgeführt wird.

5. Reinigungsverfahren nach Anspruch 4, **dadurch gekennzeichnet, dass** in der Reduktionsstufe ein pH-Wert von 5 bis 7 eingehalten wird.

6. Reinigungsverfahren nach Anspruch 5, **dadurch gekennzeichnet, dass** in der Reduktionsstufe ein pH-Wert von 5, 0 bis 7,0 eingehalten wird.

7. Reinigungsverfahren nach einem der vorhergehenden Ansprüche, **dadurch gekennzeichnet, dass** der Reinigungslösung I ein Komplexbildner in einer Menge zugesetzt wird, die max. 10 % der zum Komplexieren der durch die Reduktion entstandenen Menge an Eisen-II entspricht.

8. Reinigungsverfahren nach Anspruch 7, **dadurch gekennzeichnet, dass** als Komplexbildner EDTA verwendet wird.

9. Reinigungsverfahren nach einem der vorhergehenden Ansprüche, **dadurch gekennzeichnet, dass** es in einem Temperaturbereich von 90 °C bis 200°C durchgeführt wird.

10. Reinigungsverfahren nach Anspruch 9, **dadurch gekennzeichnet, dass** es in Temperaturbereich von 140°C bis 200°C durchgeführt wird.

11. Reinigungsverfahren nach einem der vorhergehenden Ansprüche, **gekennzeichnet durch** die Verwendung einer Reinigungslösung I, in der Hexamethylentetramin und EDTA in einem Molverhältnis von 3,5:1 bis 2:1 enthalten sind.

12. Reinigungsverfahren nach Anspruch 11, **dadurch gekennzeichnet, dass** die Reinigungslösung I 0,6 bis 0,7 mol/l Hexamethylentetramin und 0,17 bis 0,36 mol/l EDTA enthält.

13. Reinigungsverfahren nach einem der vorhergehenden Ansprüche, **gekennzeichnet durch** die Verwendung einer Reinigungslösung II, die EDTA als Komplexbildner enthält.

14. Reinigungsverfahren nach Anspruch 13, **gekennzeichnet durch** die Verwendung einer Reinigungslösung II, die ausschließlich EDTA als Komplexbildner enthält.

15. Reinigungsverfahren nach einem der vorhergehenden Ansprüche, **dadurch gekennzeichnet, dass** die Komplexierungsstufe in leicht saurer bis leicht alkalischer Lösung durchgeführt wird.

16. Reinigungsverfahren nach Anspruch 15, **dadurch gekennzeichnet, dass** in der Komplexierungsstufe ein pH-Wert von 6 bis 10 eingehalten wird

17. Reinigungsverfahren nach Anspruch 16, **dadurch gekennzeichnet, dass** in der Komplexierungsstufe ein pH-Wert von 6,5 bis 9,3 eingehalten wird

## Claims

1. Two-stage cleaning process for removing magnetite-containing deposits from a pressure vessel of a power station, in which the deposits are treated with an aqueous cleaning solution which contains a reducing agent and has been heated to an elevated cleaning temperature in order to reduce iron(III) ions to iron(II) ions, with a cleaning solution containing a presubstance which liberates the reducing agent under the conditions prevailing during cleaning being introduced into the pressure vessel, **characterized in that** the process is carried out in two stages, with a treatment with first cleaning solution I containing hexamethylenetetramine as presubstance and EDTA in a molar ratio of from 3.5:1 to 2:1 being carried out in a reduction stage and a second cleaning solution II containing a complexing agent which forms a soluble complex with divalent iron ions being introduced in a subsequent complexation stage.

2. Cleaning process according to Claim 1, **characterized in that** triethylamine is added to the cleaning solution II.

3. Cleaning process according to Claim 2, **characterized in that** the cleaning solution II is saturated with EDTA and contains not more than 0.5 mol/l of triethylamine.

4. Cleaning process according to any of the preceding claims, **characterized in that** the reduction stage is carried out in slightly acidic to slightly alkaline solution.

5. Cleaning process according to Claim 4, **characterized in that** a pH of from 5 to 7 is maintained in the reduction stage.

6. Cleaning process according to Claim 5, **characterized in that** a pH of from 5.0 to 7.0 is maintained in the reduction stage.

7. Cleaning process according to any of the preceding claims, **characterized in that** a complexing agent is added to the cleaning solution I in an amount which corresponds to not more than 10% of the amount required for complexation of the amount of iron(II) formed by the reduction.

8. Cleaning process according to Claim 7, **characterized in that** EDTA is used as complexing agent.

9. Cleaning process according to any of the preceding claims, **characterized in that** it is carried out in a temperature range from 90°C to 200°C.

10. Cleaning process according to Claim 9, **characterized in that** it is carried out in a temperature range of from 140°C to 200°C.

11. Cleaning process according to any of the preceding claims, **characterized by** the use of a cleaning solution I in which hexamethylenetetramine and EDTA are present in a molar ratio of from 3.5:1 to 2:1.

12. Cleaning process according to Claim 11, **characterized in that** the cleaning solution I contains from 0.6 to 0.7 mol/l of hexamethylenetetramine and from 0.17 to 0.36 mol/l of EDTA.

13. Cleaning process according to any of the preceding claims, **characterized by** the use of a cleaning solution II containing EDTA as complexing agent.

14. Cleaning process according to Claim 13, **characterized by** the use of a cleaning solution II containing exclusively EDTA as complexing agent.

15. Cleaning process according to any of the preceding claims, **characterized in that** the complexation stage is carried out in slightly acidic to slightly alkaline solution.

16. Cleaning process according to Claim 15, **characterized in that** a pH of from 6 to 10 is maintained in the complexation stage.

17. Cleaning process according to Claim 16, **characterized in that** a pH of from 6.5 to 9.3 is maintained in the complexation stage.

## Revendications

1. Procédé de nettoyage à deux étapes, pour l'élimination de dépôts contenant de la magnétite à partir d'un réservoir sous pression d'une centrale électrique, dans laquelle les dépôts sont traités avec une solution de nettoyage aqueuse, chauffée à une température de nettoyage et contenant un agent réducteur, pour réduire des ions fer III en ions fer II, dans lequel une solution de nettoyage contenant une substance initiale libérant l'agent réducteur dans les conditions présentes pendant le nettoyage est introduite dans le réservoir sous pression, **caractérisé en ce qu'**il est exécuté en deux étapes, dans lequel, au cours d'une étape de réduction, un traitement est effectué avec une première solution de nettoyage I, contenant de l'hexaméthylènetétramine comme substance initiale et de l'EDTA selon une relation molaire de 3,5:1 à 2:1, et une deuxième solution de nettoyage II est ajoutée au cours d'une étape de complexation consécutive, laquelle contient un agent complexant formant une liaison de complexation soluble avec des ions ferreux bivalents.

2. Procédé de nettoyage selon la revendication 1, **caractérisé en ce que** de la triéthylamine est ajoutée à la solution de nettoyage II.

3. Procédé de nettoyage selon la revendication 2, **caractérisé en ce que** la solution de nettoyage II est saturée d'EDTA et contient au maximum 0,5 mol/l de triéthylamine.

4. Procédé de nettoyage selon l'une des revendications précédentes, **caractérisé en ce que** l'étape de réduction est exécutée dans une solution légèrement acide à légèrement alcaline.

5. Procédé de nettoyage selon la revendication 4, **caractérisé en ce qu'**une valeur de pH de 5 à 7 est maintenue au cours de l'étape de réduction.

6. Procédé de nettoyage selon la revendication 5, **caractérisé en ce qu'**une valeur de pH de 5,0 à 7,0 est maintenue au cours de l'étape de réduction.

7. Procédé de nettoyage selon l'une des revendications précédentes, **caractérisé en ce qu'**un agent complexant est ajouté à la solution de nettoyage I, dans une quantité correspondant au maximum à 10% de la quantité de fer II obtenue par la réduction pour la complexation.

8. Procédé de nettoyage selon la revendication 7, **caractérisé en ce que** de l'EDTA est utilisé comme agent complexant.

9. Procédé de nettoyage selon l'une des revendications précédentes, **caractérisé en ce qu'**il est exécuté dans une plage de températures de 90°C à 200°C.

10. Procédé de nettoyage selon la revendication 9, **caractérisé en ce qu'**il est exécuté dans une plage de températures de 140°C à 200°C.

11. Procédé de nettoyage selon l'une des revendications précédentes, **caractérisé par** l'utilisation d'une solution de nettoyage I, contenant de l'hexaméthylènetétramine et de l'EDTA selon une relation molaire de 3,5:1 à 2:1.

12. Procédé de nettoyage selon la revendication 11, **caractérisé en ce que** la solution de nettoyage I contient de 0,6 à 0,7 mol/l d'hexaméthylènetétramine et de 0,17 à 0,36 mol/l d'EDTA.

13. Procédé de nettoyage selon l'une des revendications précédentes, **caractérisé par** l'utilisation d'une solution de nettoyage II contenant de l'EDTA comme agent complexant.

14. Procédé de nettoyage selon la revendication 13, **caractérisé par** l'utilisation d'une solution de nettoyage contenant exclusivement de l'EDTA comme agent complexant.

15. Procédé de nettoyage selon l'une des revendications précédentes, **caractérisé en ce que** l'étape de complexation est exécutée dans une solution légèrement acide à légèrement alcaline.

16. Procédé de nettoyage selon la revendication 15, **caractérisé en ce qu'**une valeur de pH de 6 à 10 est maintenue au cours de l'étape de complexation.

17. Procédé de nettoyage selon la revendication 16, **caractérisé en ce qu'**une valeur de pH de 6,5 à 9,3 est maintenue au cours de l'étape de complexation.
